(19) Europäisches Patentamt
European Patent Office
Office européen des brevets

(11) EP 0 661 393 B1

(12) # EUROPÄISCHE PATENTSCHRIFT

(45) Veröffentlichungstag und Bekanntmachung des Hinweises auf die Patenterteilung:
**17.02.1999 Patentblatt 1999/07**

(51) Int Cl.6: **D01F 6/84**

(21) Anmeldenummer: **94119952.3**

(22) Anmeldetag: **16.12.1994**

(54) **Hochfestes schwer entflammbares Polyestergarn, Verfahren zu seiner Herstellung und seine Verwendung**

High tenacity, fire-resistant polyester yarn, method for its production and its use

Fil polyester à haute tenacité, résistant au feu, procédé de sa production et son utilisation

(84) Benannte Vertragsstaaten:
**CH DE FR GB IT LI NL**

(30) Priorität: **27.12.1993 DE 4344691**

(43) Veröffentlichungstag der Anmeldung:
**05.07.1995 Patentblatt 1995/27**

(73) Patentinhaber: **HOECHST AKTIENGESELLSCHAFT
65929 Frankfurt am Main (DE)**

(72) Erfinder: **Leumer, Gerhard, Dr.
D-86399 Bobingen (DE)**

(74) Vertreter: **Zounek, Nikolai, Dipl.-Ing. et al
Patentanwaltskanzlei Zounek,
Industriepark Kalle-Albert,
Gebäude H287
65174 Wiesbaden (DE)**

(56) Entgegenhaltungen:
**CH-A- 513 992**
**DE-A- 2 346 787**
**DE-A- 2 454 189**
**DE-B- 1 288 734**
**GB-A- 1 174 101**

- **CHEMICAL ABSTRACTS, vol. 113, no. 18, 29.Oktober 1990 Columbus, Ohio, US; abstract no. 154212j, KONNO ET AL. 'Fire-resistant polyester sewing yarns' Seite 91; Spalte 1; & JP-A-02 127 517 (TORAY INDUSTRIES, INC.) 16.Mai 1990**
- **CHEMICAL ABSTRACTS, vol. 109, no. 26, 26.Dezember 1988 Columbus, Ohio, US; abstract no. 232679a, KONNO ET AL. 'Manufacture of fire-resistant difunctional phosphorus compounds modified polyester fibers with low heat shrinkage' Seite 82; Spalte 2; & JP-A-63 152 411 (TORAY INDUSTRIES, INC.) 24.Juni 1988**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 661 393 B1

Printed by Jouve, 75001 PARIS (FR)

## Beschreibung

Die vorliegende Erfindung betrifft ein hochfestes Polyestergarn mit permanenter Schwerentflammbarkeit, Verfahren zu seiner Herstellung und seine Verwendung zur Herstellung technischer Textil- und Fasermaterialien.

Zur Herstellung technischer Textil- und Fasermaterialien, wie z.B. hochfesten Planen für textiles Bauen (z.B. freitragende Überdachungen, Zelte, Schutz- und Bauzäune), lineare oder flächenförmige Verstärkungsmaterialien (Festigkeitsträger) für Kunststoff- und Gummiindustrie (z.B. Reifen- und Treibriemenkorde, Verstärkungseinlagen für kunststoffbeschichtete Planen, Dachbahnen oder Transportbänder, Geotextilien) sind Polyester-Fasermaterialien erforderlich, die eine besonders hohe Festigkeit, in Kombination mit anderen, für den speziellen Einsatzbereich spezifizierten Eigenschaften, wie z.B. bestimmte Bereiche der Dehnbarkeit, des Schrumpfvermögens, des Elastizitätsmoduls, aufweisen.

Hochfeste Polyester-Fasermaterialien, die derartige, für den technischen Einsatz geeignete Eigenschaftskombinationen aufweisen, sind bekannt, beispielsweise aus der GB-A-1 174 101.

Handelsübliche Typen für die genannten technischen Einsatzgebiete, wie z.B. die hochfesten Polyestergarn-Typen (R)TREVIRA HOCHFEST haben eine feinheitsbezogene Höchstzugkraft im Bereich von ca. 70 bis 85 cN/tex in Kombination mit einer Reißdehnung im Bereich von 5 bis 20 % und einem Hitzeschrumpf bei 200°C von ca. 2 bis 22 %.

Die Herstellung derartiger hochfester Polyestergarne erfolgt in der Regel durch Schmelzspinnen relativ hochmolekularer Polyester (IV > 0,8) mit relativ niedrigen Spinnabzugsgeschwindigkeiten und anschließendes, in der Regel mehrstufiges Verstrecken der Spinnfäden auf die erforderliche Festigkeit und Reißdehnung, ggf.

Aufbringen eines Schutzdralls oder Zwirnen und abschließendes Thermofixieren zur Einstellung der Gesamteigenschaftskombination. Diese klassische Herstellungsmethode für technische Polyestergarne ist z.B. in der DE-C-12 88 734 (Chantry/Molini) beschrieben. Neuere Verfahren, wie z.B. das in der EP-A-0 526 740 (Hoechst AG) beschriebene Verfahren zur Herstellung technischer Polyestergarne arbeiten mit wesentlich höheren Spinngeschwindigkeiten und niedrigeren Verstreckverhältnissen.

Im Gegensatz zu technischen Polyestergarnen haben Polyestergarne für den textilen Gebrauch ein deutlich niedrigeres Festigkeitsniveau. Die Reißfestigkeit textiler Fäden liegt im Bereich von ca. 30 bis 50 cN/tex, für spezielle Erfordernisse, z.B. zur Erzielung besonderer Pillarmut sind vorzugsweise Typen im unteren Festigkeitsbereich, insbesondere solche mit besonders geringer Querfestigkeit erforderlich.

Eine Forderung, die zunächst nur im textilen Anwendungsbereich an Polyester-Garne und -Flächengebilde gestellt wurde, ist die Schwerentflammbarkeit.

Zur Erfüllung dieser Anforderungen ist es bekannt geworden, die Textilmaterialien nach ihrer Herstellung mit Flammschutzausrüstungen zu versehen. Die verschiedenen hierzu eingesetzten Hilfsmittel befinden sich jedoch nur auf der Oberfläche der Textilien und sind daher relativ leicht zu entfernen, sodaß z.B. durch Waschen die Flammschutzwirkung stark beeinträchtigt wird.

Eine dramatische Verbesserung des Brandverhaltens von Polyesterfaser-Materialien konnte dadurch erzielt werden, daß zu ihrer Herstellung Polyesterrohstoffe eingesetzt wurden, die in der Kette des Polyestermoleküls Bausteine enthalten, die den Polyester selbst schwer entflammbar machen.

Garne aus derartigen Polyester weisen eine waschbeständige (permanente) Schwerentflammbarkeit auf.

Solche schwer entflammbar modifizierten Polyesterrohstoffe und Fasermaterialien daraus sind aus den Deutschen Patenten 23 46 787 und 24 54 189 bekannt. Die dort beschriebenen schwer entflammbaren Fäden haben eine Reißfestigkeit von ca. 33 cN/tex und eine Reißdehnung von 35 % und entsprechen damit üblichen Garnen für den textilen Anwendungsbereich. Sie werden insbesondere für die Herstellung von schwer entflammbaren Dekorationsstoffen, Teppichen, Gardinen u. dgl. empfohlen. Ein handelsübliches, schwer entflammbares Polyester-Filamentgarn ist beispielsweise (R)TREVIRA CS der Fa. Hoechst AG, mit einer für textile Anwendungen schon relativ hohen feinheitsbezogenen Höchstzugkraft von bis zu ca. 45 cN/tex, einer Reißdehnung von ca. 30 % und einem Trockenhitze-Schrumpf von etwa 20 % bei 200°C.

Mit steigendem Sicherheitsbedürfnis wird zunehmend die Forderung nach schwer entflammbaren Polyester-Fasermaterialien auch für den technischen Sektor erhoben. Die Praxis der letzten 20 Jahre hat aber gezeigt, daß die chemische Modifizierung, wie sie aus den oben genannten Druckschriften bekannt ist und für die Herstellung textiler Polyester-Fasermaterialien (Multifilament-und Stapelfaser-Garnen, daraus gefertigte gewebte, gestrickte oder gewirkte Flächengebilde oder Non-wovens) bisher bei der Herstellung technischer Fasermaterialien nicht zum Erfolg geführt hat. Versucht man nämlich die Verfahren zur Herstellung von hochfesten technischen Polyestergarnen auf die aus den besagten Patentschriften bekannten Polyesterrohstoffe zu übertragen, so gelangt man nicht zu dem gewünschten Erfolg sondern muß erhebliche Einbußen insbesondere in der feinheitsbezogenen Höchstzugkraft in Kauf nehmen.

Es ist auch bekannt, Polyester dadurch schwer entflammbar zu machen, daß man in die Polyesterkette halogenhaltige Bausteine einkondensiert.

Nach den Angaben der EP-B-0 099 933, Seite 8, Zeilen 60 ff, soll es möglich sein Polyester mit hohem Elastizitätsmodul (Young's modul) herzustellen, die als technische Verstärkungsgarne in Fahrzeugreifen, Transportbändern und Treibriemen eingesetzt werden können, wenn bei der Polyesterherstellung als Dicarbonsäurekomponente $\alpha,\omega$-Bis-(2-chlorphenoxy)-alkan-4,4'-dicarbonsäuren einsetzt.
Das so hergestellte Garn hat aber naturgemäß den allen halogenmodifizierten Polyestern anhaftenden Nachteil, daß es unter thermischer Belastung, z.B. wenn es bei einem Brand von der brennenden Umgebung hoch erhitzt wird, erhebliche Mengen von Halogenwasserstoff abspaltet, was zu schweren sekundären Sach- und Personenschäden führen kann.

Somit waren bisher für typische technische Einsatzgebiete, in denen bestimmte Eigenschaftsprofile mit einer hohen feinheitsbezogenen Höchstzugkraft gefordert werden, schwer entflammbare halogenfreie Polyestergarne nicht verfügbar.
Für einige Anwendungen technischer Polyestergarne, für die Schwerentflammbarkeit gefordert wird, blieb daher nur die nachträgliche Ausrüstung der Fasermaterialien mit Flammschutzmitteln mit deren oben genannten Nachteilen insbesondere der nur mäßigen Wasch-, Reinigungs- und Wetterbeständigkeit der Schutzwirkung.

Überraschenderweise wurde jetzt gefunden, daß es entgegen der bisherigen Erfahrung doch möglich ist, aus den gemäß den Deutschen Patentschriften 23 46 787 und 24 54 189 phosphormodifizierten, schwer entflammbaren Polyesterrohstoffen schwer entflammbare Fasermaterialien mit dem für technische Fasererzeugnisse charakteristischen Eigenschaftsprofil, insbesondere mit einer für den technischen Einsatz ausreichenden feinheitsbezogenen Höchstzugkraft, herzustellen.

Ein Gegenstand der vorliegenden Erfindung ist somit ein schwer entflammbares Multifilamentgarn, das insbesondere für technische Zwecke sehr gut geeignet ist, aus einem Polyester aus Dicarbonsäure- und Diol-Komponenten, der in der Polymerkette Baugruppen der Formel I

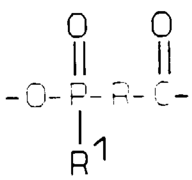

(I)

aufweist, worin

R ein gesättigter offenkettiger oder cyclischer Alkylen-, Arylen- oder Aralkylenrest und
$R^1$ ein Alkylrest mit bis zu 6 C-Atomen oder ein Aryl- oder Aralkylrest ist, das dadurch gekennzeichnet ist, daß es eine feinheitsbezogene Höchstzugkraft (F) von mindestens 65 cN/tex aufweist und in Form eines Rohgewebes bei der Brennbarkeitsprüfung nach DIN 4102/B2 eine Gesamt-Brennzeit hat, die mindestens um den Faktor 5, vorzugsweise um den Faktor 10 kürzer ist als die eines vergleichbaren Rohgewebes aus nicht-phosphormodifiziertem Polyester und daß nach DIN 54336 bei 3 und 15 sec. Beflammung und nach DIN 54333 bei 3 sec. Beflammung kein Nachbrennen auftritt.

Bevorzugte Ausführungsformen sind in den abhängigen Ansprüchen beschrieben.

Die erfindungsgemäßen Garne zeichnen sich somit dadurch aus, daß sie eine feinheitsbezogene Höchstzugkraft haben, die auf dem Niveau bekannter hochfester Garne für den technischen Einsatz liegt, und gleichzeitig sehr schwer entflammbar sind.

Der Brennbarkeitsvergleich erfolgt zweckmäßigerweise mit einem Vergleichs-Rohgewebe, das aus normalem, d.h. nicht phosphormodifiziertem Polyestergarn hergestellt ist und ansonsten die gleichen Konstruktionsdaten (z. B. Flächengewicht, Garntiter, Gewebekonstruktion) aufweist, wie das Prüfgewebe.

Dabei zeigt das aus erfindungsgemäßem Garn hergestellte Test-Gewebe eine Gesamt-Brennzeit die mindestens um den Faktor 5 kürzer ist als die des Vergleichsgewebes, d. h. die nur maximal 1/5 der Gesamt-Brennzeit des Vergleichsgewebes beträgt.

Nach den bisherigen Erfahrungen ist es für den Fachmann sehr überraschend, daß es gelungen ist, diese Kombination wertvoller Eigenschaften bei einem Polyestergarn herbeizuführen, das aus einem durch Einbau von Bausteinen der Formel I phosphormodifizierten Polyester hergestellt worden ist.

Bevorzugte erfindungsgemäße schwer entflammbare Multifilamentgarne enthalten phosphorhaltige Bausteine der Formel I, in denen die Reste R und $R^1$ die in den Deutschen Patenten Nr. 23 46 787 und 24 54 189 ausführlich beschriebenen Bedeutungen haben. Halogenfreie Reste R und $R^1$ sind bevorzugt.

Insbesondere bedeuten in bevorzugten erfindungsgemäßen schwer entflammbaren Multifilamentgarnen

R offenkettiges Alkan-diyl mit 1 bis 15, vorzugsweise 2 bis 10, C-Atomen, cyclisches Alkan-diyl mit 4 bis 8, vorzugsweise 6, C-Atomen, Arylen mit 6 bis 12 vorzugsweise 6-10 C-Atomen oder Aralkyl mit 7 bis 13, vorzugsweise 7 bis 11, C-Atomen, jeweils mit einem bis drei, vorzugsweise einem oder zwei kondensierten oder nicht kondensierten Kernen, und

$R^1$ Alkyl mit 1 bis 6, vorzugsweise 1 bis 4, C-Atomen, Arylen mit 6 bis 12, vorzugsweise 6 bis 10, C-Atomen oder Aralkyl mit 7 bis 13, vorzugsweise 7 bis 11, C-Atomen, jeweils mit ein oder zwei kondensierten oder nicht kondensierten Kernen.

Die Reste R und $R^1$ können einen oder mehrere, vorzugsweise einen oder zwei, einbindige Substituenten tragen. Offenkettiges Alkan-diyl oder Alkyl kann durch Alkoxygruppen mit 1-6 C-Atomen, vorzugsweise durch Methoxy- oder Ethoxygruppen substituiert sein; Cyclische Alkylgruppen und die aromatischen Kerne der Aryl- und Aralkylgruppen können Alkylgruppen mit 1 bis 6 C-Atomen, vorzugsweise 1 oder 2 C-Atomen, Alkoxygruppen mit 1 bis 6 C-Atomen, vorzugsweise 1 oder 2 C-Atomen, oder Sulfonsäure oder Sulfonatgruppen tragen.
In mehrkernigen Arylgruppen können die Kerne kondensiert sein oder sie können direkt oder durch Brückenglieder miteinander verbunden sein. Desgleichen können in araliphatischen Resten R und $R^1$ die aromatische Ringe und die aliphatischen Glieder direkt oder über Brückenglieder miteinander verbunden sein.
Geeignete Brückenglieder sind insbesondere -O-, -S- und $-SO_2-$.

Ganz besonders bevorzugt sind schwer entflammbare Multifilamentgarne aus Polyestern, die Baugruppen der Formel I aufweisen in denen

$R^1$ Alkan-diyl mit 2 bis 6 C-Atomen, Cycloalkan-diyl mit 6 C-Atomen, Methylenphenyl oder Phenylen, insbesondere Ethylen, und

$R^2$ Alkyl mit 1 bis 6 C-Atomen, oder Aryl oder Aralkyl mit 6 bis 7 C-Atomen, insbesondere Methyl, Ethyl, Phenyl oder Benzyl bedeuten.

Je nach dem geplanten Einsatzzweck können die erfindungsgemäßen Garne mit einer Kombination besonderer anwendungsgünstiger Eigenschaften ausgestattet werden.

Eine bevorzugte Gruppe erfindungsgemäßer Garne weist eine feinheitsbezogene Höchstzugkraft von über 65 cN/tex, und einen Trockenhitzeschrumpf $S_{200}$ von unter 7,5 % auf.

Eine weitere bevorzugte Gruppe erfindungsgemäßer Garne weist eine feinheitsbezogene Höchstzugkraft von über 70 cN/tex und einen Trockenhitzeschrumpf $S_{200}$ von unter 15 % auf.

Ferner sind erfindungsgemäße Garne bevorzugt, die eine feinheitsbezogene Höchstzugkraft von über 75 cN/tex und einen Trockenhitzeschrumpf $S_{200}$ von über 15 % aufweisen.

Besonders bevorzugt sind erfindungsgemäße Garne, für die zwischen der feinheitsbezogenen Höchstzugkraft F (in cN/tex) des Garns und seinem Trockenhitzeschrumpf $S_{200}$ (in %) der aus Gleichung (1) ersichtliche Zusammenhang besteht:

$$F = K + 0{,}954 * S_{200} \qquad (1)$$

wobei der Summand K einen Wert von über 55, vorzugsweise von 60 bis 67, hat und $S_{200}$ ein Wert von 2 bis 25, vorzugsweise von 4 bis 22 ist.

Die Figur zeigt in einem Diagramm, in dem die feinheitsbezogene Höchstzugkraft gegen den Trockenhitzeschrumpf aufgetragen ist, die Gebiete in denen bisher bekannte textile, schwer entflammbare Multifilamentgarne und die erfindungsgemäßen, für vielfältige technische Anwendungen geeigneten hochfesten und schwer entflammbaren Multifilamentgarne, sowie die bisher bekannten technischen hochfesten, aber entflammbaren Garne liegen.
Die bisher üblichen textilen schwer entflammbaren Fasermaterialien liegen in dem einfach schraffierte Gebiet A unterhalb der Grenze von 45 cN/tex (Gerade 1).
Die erfindungsgemäßen Multifilamentgarne liegen vorzugsweise im Gebiet oberhalb der Kurve 2, insbesondere in dem zwischen den Kurven 3 und 4 eingeschlossenen doppelt schraffierten Gebiet B. Das Sternsymbol (*) bezeichnet die Lage eines bekannten, handelsüblichen schwer entflammbaren Polyester-Fasermaterials in diesem Diagramm, die x-Zeichen kennzeichnen die Lage bekannter, hochfester aber normal entflammbarer Polyester-Fasermaterialien und die kleinen Kreise (o) kennzeichnen die Lage erfindungsgemäßer hochfester und schwer entflammbarer Polyester-Fasermaterialien. Der Stern im Kreis kennzeichnet die Lage eines handelsüblichen hochfesten, aber brennbaren Polyestergarns ((R)TREVIRA 716) in diesem Diagramm.

Der Trockenhitzeschrumpf der erfindungsgemäßen Multiflamentgarne bei 200 °C liegt vorzugsweise im Bereich von 5 bis 20 %, die Höchstzugkraftdehnung im Bereich von 5 bis 30, vorzugsweise 7,5 bis 26 %,
die Bezugsdehnung bei einer Belastung von 54 cN/tex im Bereich von 4 bis 25 %, vorzugsweise 5 bis 23 % und

der Reißarbeitsindex $A_R$ = F·E/2im Bereich von 300 bis 900 [%·cN/tex].

Die Bestimmung des Heißluftschrumpfs bei 200°C ($S_{200}$) erfolgt nach DIN 53866, Teil 3.

Die Polyester der erfindungsgemäßen schwer entflammbaren Multifilamentgarne, die die Baugruppen der Formel I enthalten, bestehen im übrigen aus den in bekannten faserbildenden Polyestern üblichen Baugruppen, nämlich solchen, die sich von Dicarbonsäure, vorzugsweise ein -oder zweikernigen aromatischen Dicarbonsäuren, und von aliphatischen Diolen, insbesondere Alkandiolen mit 2-4 C-Atomen, oder 1,4-Di-hydroxymethyl-cyclohexan ableiten.

Gängige aromatische Dicarbonsäurebausteine sind die zweiwertigen Reste von Benzoldicarbonsäuren, insbesondere der Terephthalsäure und der Isophthalsäure; gängige Diole haben 2-4 C-Atome, wobei das Ethylenglycol besonders geeignet ist. Vorzugsweise enthalten die Polyester über 90 Mol.-% Ethylenterephthalat-Einheiten. Die restlichen 20 bzw. 10 Mol% bauen sich dann aus den Baugruppen der Formel I und aus Dicarbonsäureeinheiten und Dioleinheiten auf, die als sogenannte Modifizierungsmittel wirken und die es dem Fachmann gestatten, die physikalischen und chemischen Eigenschaften der hergestellten Filamente gezielt zu beeinflussen. Beispiele für solche Dicarbonsäureeinheiten sind Reste von aromatischen oder araliphatischen Dicarbonsäuren mit einem oder mehreren, vorzugsweise einem oder zwei kondensierten oder nicht kondensierten aromatischen Kernen, beispielsweise der Isophthalsäure, 5-Sulfoisophthalsäure, 5-Sulfopropoxyisophthalsäure, Naphthalin-2,6-dicarbonsäure, Biphenyl-4,4'-dicarbonsäure, p-Phenylendiessigsäure, Diphenyloxid-4,4'-dicarbonsäure oder Diphenoxyalkan-dicarbonsäure, oder Reste von cyclischen oder acyclischen aliphatischen Dicarbonsäure wie z.B. trans-Hexahydro-terephthalsäure, 1,2-cyclobutan-dicarbonsäure, Glutarsäure, Adipinsäure, Sebazinsäure; Beispiele für modifizierend wirkende Diolreste sind solche von verzweigten und/oder längerkettigen Diolen mit 3 bis 10, vorzugsweise 3 bis 6, C-Atomen, wie z.B. von 1,3-Propandiol, 1,4-Butandiol, 1 ,6-Hexandiol, 2,2-Dimethyl-propandiol oder 2-Ethyl-1,6-hexandiol, oder von cyclischen Diolen, beispielsweise von 1,4-Hydroxymethyl-cyclohexan, oder von Ethergruppen enthaltenden Diolen, wie z.B. von Di- oder Tri-ethylenglycol oder, sofern in geringer Menge vorhanden, von Polyglycol mit einem Molgewicht von ca. 500 - 2000.

Im einzelnen sind schwer entflammbare Multifilamentgarne bevorzugt aus Polyestern, deren Polymerketten, bezogen auf die Summe aller ihrer Dicarbonsäure- und Diol-Baugruppen, aus

0,5 bis 14, vorzugsweise 1,0 bis 10 Mol.-%, Baugruppen der oben angegebenen Formel I,

40 bis 49,75 Mol.-%, vorzugsweise 43,5 bis 49,5 Mol.-%, Baugruppen der Formel II

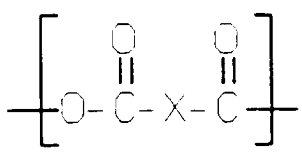

**(II)**

und 40 bis 49,75 Mol.-%, vorzugsweise 43,5 bis 49,5 Mol.-% Baugruppen der Formel IV

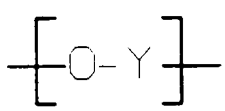

**(IV)**

aufgebaut sind, worin

X zu mindestens 80 Mol.-% (bezogen auf die Gesamtheit der Reste X = 100 Mol.-%) ein- oder zweikernige aromatische Reste mit 6 bis 12 C-Atomen, vorzugsweise Phenylenreste, insbesondere 1,4-Phenylenreste und zu maximal 20 Mol.-% ein- oder mehrkernige aromatische Reste mit 5 bis 16, vorzugsweise 6 bis 18 C-Atomen, araliphatische Reste mit einem oder zwei aromatischen Kernen und 1 bis 6 C-Atomen in den aliphatischen Strukturelementen, oder aliphatische Reste mit 4 bis 10 Kohlenstoffatomen, vorzugsweise 6 bis 8 Kohlenstoffatomen, bedeutet

Y zu mindestens 80 Mol.-% (bezogen auf die Gesamtheit der Reste Y = 100 Mol.-%) Alkylen- oder Polymethylengruppen mit 2 bis 4 Kohlenstoffatomen oder Cycloalkan- oder Bis-methylen-cycloalkangruppen mit 6 bis

10 C-Atomen und zu maximal 20 Mol.-% geradkettiges oder verzweigtes Alkandiyl mit 5 bis 16, vorzugsweise 5 bis 8, C-Atomen, Cycloalkan- oder Bis-methylen-cycloalkangruppen mit 6 bis 10 C-Atomen oder Reste der Formel $-(CH_2CHR^3-O)_n-CH_2CHR^3-$, worin $R^3$ für Methyl oder Wasserstoff steht und n eine ganze Zahl von 1 bis 40 bedeutet, wobei n = 1 oder 2 für Anteile bis zu 15 Mol.-% bevorzugt sind und Gruppen mit n = 10 bis 40 vorzugsweise nur in Anteilen von unter 5 Mol.-% vorhanden sind.

Ein- oder zweikernige aromatische Reste mit 6 bis 12 C-Atomen, für die X steht, sind vorzugsweise Phenylen, insbesondere 1,4-Phenylen, Naphthylen, insbesondere 2,6- Naphthylen und Biphenylen, insbesondere 4,4'-Biphenylen.

In Polyestern, die Baugruppen der Formel III enthalten, ist $X^1$ vorzugsweise m-Penylen oder insbesondere p-Phenylen.

Besonders bevorzugt sind schwer entflammbare Multifilamentgarne aus Polyestern, die keine Baugruppen der Formel III aufweisen, in denen 90 bis 100 Mol.-%, vorzugsweise 95 bis 100 Mol.-%, der Reste X p-Phenylen und 0 bis 10 Mol.-%, vorzugsweise 0 bis 5 Mol.-%, der Reste X
m-Phenylen, 5-Sulpho-phenylen-1,3; 5-Sulfopropoxy-phenylen-1,3; Naphtylen-2,6; Biphenylen-4,4'; 1,4-Bis-methylen-phenyl, Cyclohexan-1,4-diyl, Cylobutan-1,2-diyl, n-Butan-1,4-diyl, n-Pentan-1,5-diyl, n-Hexan-1,6-diyl oder Reste der Formel V

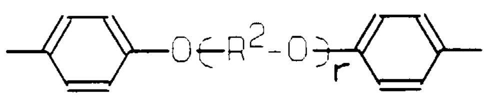

(V)

worin $R^2$ geradkettiges oder verzweigtes Alkan-diyl mit 2 bis 6 C-Atomen bedeutet und r für 0 oder 1 steht, sind.

Besonders bevorzugt sind auch schwer entflammbare Multifilamentgarne aus Polyestern aus Baugruppen der Formeln I, II und IV wobei X (bezogen auf die Gesamtheit aller Reste X = 100 Mol.-%) zu 85 bis 98 Mol.-% p-Phenylen zu 2 bis 15 Mol.-% m-Phenylen und zu 0 bis 5 Mol.-% aliphatische Reste sind.

Besonders bevorzugt sind auch schwer entflammbare Multifilamentgarne aus Polyestern, bei denen 80 bis 100 Mol.-% der Reste Y Ethylenreste,
0 bis 20 Mol% der Reste Y 1,4-Bis-methylen-cyclohexan- und/oder 2,2-Dimethylpropan-1,3-diyl-reste, und
0 bis 3 Mol.-% längerkettige Diolreste sind.

Weiterhin sind besonders bevorzugt schwer entflammbare Multifilamentgarne aus Polyestern, deren Kette zu mindestens 90 Mol.-% aus Ethylenterephthalatgruppen besteht.

Zweckmäßigerweise haben die Polyester der erfindungsgemäßen schwer entflammbaren Multifilamentgarne eine spezifische Viskosität von 0,8 bis 1,7, vorzugsweise von 1,1 bis 1,5, gemessen in einer 1 gew.-%igen Lösung der Polyester in Dichloressigsäure bei 25°C.

Die aromatischen Reste, für die X stehen, können im Rahmen der gegebenen Definition alle gleich sein, oder sie können verschieden sein.
Insbesondere können die oben genannten, von X repräsentierten Baugruppen, die mindestens 80 Mol.-% aller Reste X ausmachen, einzeln oder gemischt in der Polyesterkette vorliegen. Bevorzugt ist es, wenn die mindestens 80 Mol.-% der Reste X von nur einem oder zwei Individuen, insbesondere einem Individuum, aus der Gruppe der für diese Hauptkomponenten angegebenen Reste gebildet werden.
Eine eventuell gewünschte weitere Modifizierung der Polyesterkette erfolgt dann vorzugsweise durch andere Baugruppen im Rahmen der Definition, die für die maximal 20 Mol.-% der Baugruppen X gegeben worden ist.

So können die mindestens 80 Mol.-% aromatischen Reste X beispielsweise alle 1,4-Phenylenreste sein oder sie können sich beispielsweise im Molverhältnis von 4:6 bis 6:4 aus 2,6-Naphylenresten und Biphenyl-4,4'-diyl-Resten zusammensetzen.
Bevorzugt sind Polyester, in denen mindestens 95 Mol.-% der Reste X aromatische und maximal 5 Mol.-% aliphatische Reste bedeuten, insbesondere aber solche, in denen X ausschließlich für aromatische Reste steht.

Auch die Reste, für die Y stehen, können im Rahmen der gegebenen Definition alle gleich sein, oder sie können verschieden sein.
Insbesondere können die oben genannten, von Y repräsentierten Baugruppen, die mindestens 80 Mol.-% aller Reste Y ausmachen, einzeln oder gemischt in der Polyesterkette vorliegen. Bevorzugt ist es, wenn die mindestens 80 Mol.-% der Reste Y von nur einem oder zwei Individuen, insbesondere einem Individuum aus der Gruppe der für diese Hauptkomponenten angegebenen Reste gebildet werden.
Eine eventuell gewünschte weitere Modifizierung der Polyesterkette erfolgt dann vorzugsweise durch andere Baugruppen im Rahmen der Definition, die für die maximal 20 Mol.-% der Baugruppen Y gegeben worden ist.

So können die mindestens 80 Mol.-% aliphatischen Reste Y beispielsweise alle Ethylenreste sein oder sie können sich beispielsweise im Molverhältnis von 10:1 bis 1:10 aus Ethylen und 1,4-Dimethylen-cyclohexan-Resten zusammensetzen.
Besonders bevorzugt sind Polyester, in denen mindestens 95 Mol.-% der Reste Y Ethylen-Reste sind.

Beispiele für geeignete aromatische Reste, für die X stehen, sind 1,4- und 1,3-Phenylen. Weitere Beispiele für derartige aromatische Reste sind:
1,4-, 1,5-, 1,8-, 2,6- und 2,7-Naphthylen, 4,4'-Biphenylen, Furylen und Reste der Formel VI

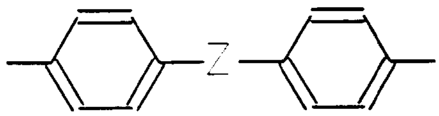

(VI)

worin Z Polymethylen oder Alkylen mit 1 bis 4 Kohlenstoffatomen, $-SO_2-$, -COO-, -O- oder -S- bedeutet.

Die aromatischen Reste, für die X und $X^1$ stehen, können ihrerseits noch einen oder zwei Substituenten tragen. In diesem Fall ist es jedoch bevorzugt, daß nur ein Anteil von bis zu 15 %, insbesondere von bis zu 7 % der vorhandenen aromatischen Reste substituiert ist. Vorzugsweise tragen die substituierten aromatischen Reste jeweils nur einen Substituenten. Geeignete Substituenten sind beispielsweise Alkyl mit 1 bis 4 C-Atomen, Alkoxy mit 1 bis 4 C-Atomen, Chlor und die Sulfogruppe, wobei eine Halogensubstitution weniger bevorzugt ist.

Reste, die sich von aliphatischen Dicarbonsäuren ableiten, und aromatische Reste, die gewinkelte Ketten liefern, beispielsweise Isophthalsäurereste, oder die sperrigere aromatische Kerne, wie den Naphthalinkern aufweisen, sowie die längerkettigen, für Y stehenden Baugruppen werden insbesondere dann in die Polyesterkette eingebaut, wenn eine Modifizierung der Eigenschaften des Polyesters erwünscht ist.

Ein weiteres Beispiel für ein schwer entflammbares Multifilamentgarn ist ein solches, das aus einem Polyester besteht, dessen Kette aus Bausteinen der Formel I, Ethylenterephthalatbausteinen und bis zu 10 Mol.-% anderer Bausteine aus den oben genannten Gruppen aufweist und dadurch so modifiziert worden ist, daß bestimmte Gebrauchseigenschaften erhalten werden, wie z.B. ein durch Einbau der Reste I modifiziertes Polyethylenterephthalat, das durch Einbau von Sulfogruppen enthaltenden Bausteinen (z.B. Sulfo-isophthalsäure) eine Affinität zu basischen Farbstoffen erhalten hat.

Ein weiterer Gegenstand der vorliegenden Erfindung ist ein Verfahren zur Herstellung der oben beschriebenen erfindungsgemäßen Multifilamentgarne. Bei diesem Verfahren wird ein Polyester gemäß der oben angegebenen Definitionen in an sich bekannter Weise durch Aufschmelzen, Schmelzefiltration und Extrusion aus der Schmelze gesponnen, die ersponnenen Filamente durch Anblasen mit Kühlluft abgekühlt und mit einer Spinnabzugsgeschwindigkeit von vorzugsweise über 300 m/min., insbesondere von 500 bis 1500 m/min. abgezogen, und aufgespult oder abgelegt.

Die Herstellung des erfindungsgemäßen Multifilamentgarns erfolgt kontinuierlich oder diskontinuierlich. Bei der bevorzugten diskontinuierlichen Ausführungsform werden die ersponnenen Filamente aufgespult oder abgelegt, z.B. in Form von Kabeln in Kannen. Die Verstrecking wird, vorzugsweise mit einer Geschwindigkeit von über 150 m/min, mindestens zweistufig, wobei die Vorverstreckung, die 50 bis 70 % der Gesamtverstreckung beträgt, bei einer Temperatur zwischen 70 und 85, vorzugsweise 75 und 80°C durchgeführt. In der zweiten Verstreckstufe, bei einer Verstreck-Temperatur von 215 bis 235°C, vorzugsweise 220 bis 230°C, wird ein Gesamt-Verstreckverhältnis von 1:4,5 bis 1:6 eingestellt.
Alternativ könnte die Herstellung der erfindungsgemäßen Multifilamentgarne auch in einem kontinuierlichen Spinnstreckprozeß durchgeführt werden.
Schließlich werden die verstreckten Filamente gegebenenfalls noch zur Einstellung der gewünschten Reißdehnung und des erforderlichen Hitzeschrumpfs einer Fixier- und Relaxationsbehandlung bei Temperaturen von 225 bis 240°C, vorzugsweise von 230 bis 235°C mit einem Schrumpfverhältnis von 1:1 bis 1:0,8, vorzugsweise von 1:0,995 bis 1:0,82 unterworfen.

Vorzugsweise wird beim erfindungsgemäßen Verfahren in der ersten Verstreckstufe ein Verstreckverhältnis im Bereich von 1:2,4 bis 1:3,9 eingestellt.

Vorzugsweise wird bei veränderter Spinngeschwindigkeit das Verstreckverhältnis an die geänderte Spinnorientierung angepaßt. Hierzu wird das Verstreckverhältnis der ersten Verstreckstufe vorzugsweise so eingestellt, daß sich, bezogen auf den Spinntiter, eine Verstreckspannung von 0,7 bis 1,2 cN/tex, insbesondere von 0,8 bis 1,0 cN/tex, und in der zweiten Verstreckstufe eine Verstreckspannung von 3,5 bis 5,4 cN/tex, insbesondere von 3,9 bis 5,0 cN/tex, ergibt.

Von besonderer Bedeutung ist es, daß die Kombination von Schwerentflammbarkeit mit hoher feinheitsbezogener Höchstzugkraft und einem breitem, verfahrensmäßig einstellbaren Spektrum des Thermoschrumpfs bei den erfindungsgemäßen Multifilamentgarnen nur dann ergibt, wenn die Verstreck- und Fixiertemperatur keinesfalls höher als oben angegeben gewählt werden. Höhere Verstreck- und Fixiertemperaturen führen zu einem erheblichen Rückgang der feinheitsbezogenen Höchstzugkraft.

Im Gegensatz zur Lehre der DE-C-23 46 787 und der DE-C-24 54 189 entsprechen die erfindungsgemäßen Garne in der Gesamtheit ihrer Eigenschaften (z.B. Festigkeit, Hitzeschrumpf und Reißdehnung) nicht den unmodifizierten Garnen, sondern zeigen vielmehr ein neues, eigenständiges Profil, das durch seine Variabilität vielen technischen Zwecken hervorragend angepaßt werden kann und daher besondere Vorteile aufweist.

Unter den angegebenen Verfahrensbedingungen lassen sich beispielsweise Garne mit flammhemmenden Eigenschaften herstellen, die bezüglich feinheitsbezogener Höchstzugkraft, Reißdehnung und Elastizitätsmodul vergleichbar sind den hochfesten Garnen aus unmodifizierten Polyestern (s. z.B. Beispiele 3 und 4 im Vergleich zu 12 und 13) und daher gleichwertig in den entsprechenden Einsatzgebieten Verwendung finden können.

Das Verfahren gestattet wahlweise auch die Herstellung von schwer entflammbaren Garnen mit niedrigem Schrumpfniveau, wie es beispielsweise für die Herstellung technischer Gewebe gefordert wird (s. Beispiele 1 und 2 gegenüber 11 und 12). Besonders vorteilhaft ist hierbei, daß die erfindungsgemäßen Garne eine höhere Reißarbeit (z.B. charakterisiert durch den oben angegebenen und definierten Reißarbeitskoeffizienten) zeigen, speziell aufgrund einer höheren Dehnung, was generell als vorteilhaft bei der Herstellung von Flächengebilden angesehen wird.

Das erfindungsgemäße Verfahren gestattet gewünschtenfalls auch die gezielte Herstellung von schwer entflammbaren Garnen mit hohem Thermoschrumpf, die mit unmodifiziertem Polyethylenterephthalat in einem zweistufigen Spinn-Streck-Prozess nicht hergestellt werden können. Garne mit derartig hohen Schrumpfwerten und niedriger Reißdehnung, die bevorzugt für die Herstellung von Gurten und Bändern eingesetzt werden, können aus unmodifiziertem Polyethylenterephthalat bisher nur in einem einstufigen Spinn-Streck-Prozeß erhalten werden. Gegenüber diesen einstufig hergestellten hochschrumpfenden bekannten Garnen zeigen die erfindungsgemäßen Garne deutlich höhere Festigkeit (Vergl. Beispiele 5 - 8 gegenüber 15 und 16). Überraschenderweise können diese Garne auch ohne Einschaltung eines Fixierungsschrittes erhalten werden (Beispiele 5 - 7).

Das erfindungsgemäße Verfahren gestattet auch die Herstellung von schwer entflammbaren Garnen mit feineren Titern und hoher feinheitsbezogener Höchstzugkraft, wie es beispielsweise zur Herstellung von Zeltgeweben gewünscht wird (Beispiele 9 und 10).

Besonders bevorzugt sind solche erfindungsgemäßen schwer entflammbaren Multifilamentgarne und solche Ausführungsformen des erfindungsgemäßen Herstellungsverfahrens, die eine Kombination mehrerer bevorzugter Merkmale aufweisen.

Wie bereits weiter oben ausgeführt lassen sich die Eigenschaften der erfindungsgemäßen schwer entflammbaren Multifilamentgarne durch Variation der Herstellungsbedingungen im Rahmen der oben angegebenen Bemessungsgrenzen in relativ weiten Grenzen variieren. Aufgrund dieser breiten Palette anwendungsrelevanter Eigenschaftskombinationen können die erfindungsgemäßen Garne vielfältigen technischen Anwendungen zugeführt werden.

Von hohem technische Interesse ist die Verwendung der erfindungsgemäßen schwer entflammbaren Multifilamentgarne zur Herstellung von hochfesten, schwer entflammbaren Bautextilien, wie z. B. Schutz- und Abdeckplanen, Sicherheitszäunen, Bauzäunen, Wetterschutzeinrichtungen u. drgl.

Eine weitere interessante Anwendung besteht in der Verwendung der erfindungsgemäßen schwer entflammbaren Multifilamentgarne des zur Herstellung von Zelten, wobei insbesondere die feintitrigen Typen mit Vorteil eingesetzt werden.

Weiterhin können die erfindungsgemäßen schwer entflammbaren Multifilamentgarne zur Herstellung von Transportbändern eingesetzt werden, wobei sie vornehmlich in der Kette eingesetzt und als Schuß Monofilamente benutzt werden, die dem Band die nötige Quersteifigkeit vermitteln. Zweckmäßigerweise werden in diesem Fall auch schwer entflammbare Monofilamente, z.B. die aus der EP-A-0403 969 bekannten, eingesetzt.

Mit besonderem Vorteil können die erfindungsgemäßen schwer entflammbaren Multifilamentgarne auch zur Herstellung von flammhemmenden Beschichtungsträgern eingesetzt werden z.B. bei der Fabrikation von flammhemmend beschichteten Geweben. Durch Verwendung der schwer entflammbaren Garne in Beschichtungsträger kann u. U. der Anteil an flammhemmenden Bestandteilen in der Beschichtungsmasse reduziert werden.

Eine weiteres Einsatzgebiet besteht in der Verwendung der erfindungsgemäßen schwer entflammbaren Multifilamentgarne als Festigkeitsträger in Gummierzeugnissen, wie z.B. in Förderbändern, Keilriemen, Fahrzeugreifen u. drgl..

Die folgenden Ausführungsbeispiele veranschaulichen die Herstellung und die Eigenschaften erfindungsgemäßer schwer entflammbarer Multifilamentgarne.

Beispiel 1

Chips aus Poly-(ethylen-terephthalat) mit einem Gehalt von 3 Gew.-% Baugruppen der Formel I, worin R Ethyl und $R^1$ Methyl bedeutet, einer spezifischen Viskosität von 1,376, gemessen in einer 1 gew.-%igen Lösung in Dichloressigsäure bei 25 °C, und mit einem Carboxylgruppengehalt von 17,0 mmol/kg werden bei 280°C aufgeschmolzen und über Zahnrad-Spinnpumpen über einen Spinnpack mit Sand- und Drahtnetzfilter einer Spinndüse mit 200 Spinnöffnungen zugeführt. Die Schmelzetemperatur beträgt 287°C.
Die aus der Düse austretenden Filamente werden durch Quer-Anblasen mit Luft von 30°C abgekühlt, zusammengefaßt, mit Spinnpräparation versehen und mit einer Geschwindigkeit von 740 m/min abgezogen und aufgespult.
Der Spinntiter der so erhaltenen Multifilament-Spinnfäden betrug 5400 dtex, die spezifische Viskosität des Filamentmaterials, bestimmt wie oben angegeben, betrug 1,172.
Die so hergestellten Multifilament-Spinnfäden wurden unmittelbar anschließend mehrstufig verstreckt, wobei in der ersten Stufe mit 80°C und in der zweiten Stufe bei 230°C gearbeitet wurde. Das Verstreckverhältnis wurde in der ersten Stufe auf 1:3,19, in der zweiten Stufe auf 1:1,75 eingestellt. (Gesamtverstreckung: 1:5,58) Die Geschwindigkeit des Abzugswerks der zweiten Streckstufe betrug 160 m/min.
Anschließend wurden die verstreckten Fäden noch bei 230°C unter Zulassung von Schrumpf (1:0,844) thermofixiert.
Das hergestellte Multifilamentgarn hatte folgende Eigenschaften:
Titer: 1126 dtex
Feinheitsbezogene Höchstzugkraft: 66,3 cN/tex
Höchstzugkraftdehnung: 25,4 %
Bezugsdehnung bei 54 cN/tex: 22,5
Heißluftschrumpf bei 200 °C ($S_{200}$): 4,3 %
Reißarbeitsindex wie oben definiert: 842 %·cN/tex
Spezifische Viskosität des Fasermaterials
(gemessen wie oben angegeben): 1,10

Beispiele 2 bis 10.

In analoger Weise wie im Beispiel 1 beschrieben werden aus den gleichen modifizierten Poly-(ethylen-terephthalat)-Chips, wie sie im Beispiel 1 verwendet wurden, erfindungsgemäße Multifilamentgarne unter variierten Bedingungen hergestellt.
Die Herstellungsbedingungen und die Eigenschaften der fertig verstreckten und fixierten erfindungsgemäßen Multifilamentgarne sind in der folgenden Tabelle angegeben.
Der Reißarbeitsindex $A_R$ ist, wie oben bereits angegeben, definiert als

$$A_R = F \cdot E/2$$

Beispiele 11 bis 14

Die in der Tabelle 2 angegebenen Beispiele 11 bis 14 veranschaulichen die Herstellung und die Eigenschaften von Multifilamentgarnen aus unmodifiziertem Polyethylenterephthalat, die unter den angegebenen, vergleichbaren Herstellungsbedingungen erhalten wurden.
Die Beispiele 15 und 16 der Tabelle 2 zeigen die Eigenschaften von zwei kommerziellen, hochfesten Polyethylenterephthalat-Garnen, die durch bekannte Spinnstreckverfahren hergestellt worden sind.

Tabelle 1, Erfindungsgemäße Beispiele

| Bedingungen/Merkmal | Beispiel 2 | Beispiel 3 | Beispiel 4 | Beispiel 5 | Beispiel 6 | Beispiel 7 | Beispiel 8 | Beispiel 9 | Beispiel 10 |
|---|---|---|---|---|---|---|---|---|---|
| **Spinnen** | | | | | | | | | |
| Gehalt d. Polyesters an Verb. Formel I [Gew.-%] | 3 | 3 | 3 | 3 | 3 | 3 | 3 | 3 | 3 |
| Spez.Visk. der Chips | 1,287 | 1,278 | 1,287 | 1,287 | 1,287 | 1,287 | 1,287 | 1,376 | 1,287 |
| Schmelzetemperatur [°C] | 284 | 285 | 285 | 285 | 285 | 285 | 285 | 287 | 272 |
| Spinnabzugsgeschwindigkeit [m/min] | 740 | 740 | 740 | 740 | 740 | 740 | 740 | 740 | 740 |
| **Verstrecken** | | | | | | | | | |
| Temperatur Stufe 1 [°C] | 80 | 80 | 80 | 80 | 80 | 80 | 80 | 80 | 80 |
| Verstreckverhältnis Stufe 1 | 3,85 | 3,25 | 3,25 | 3,25 | 3,25 | 3,25 | 3,25 | 3,3 | 2,57 |
| Temperatur Stufe 2 | 225 | 220 | 230 | 230 | 230 | 220 | 220 | 220 | 230 |
| Gesamt-Verstreckverhältnis | 5,63 | 5,86 | 5,8 | 5,7 | 5,86 | 5,86 | 5,86 | 4,8 | 4,8 |
| Geschwindigkeit d. 3.Streckwerks [m/min] | 300 | 200 | 200 | 200 | 200 | 200 | 200 | 160 | 200 |
| **Fixierung** | | | | | | | | | |
| Fixiertemperatur | 233 | 220 | 230 | - | - | - | 230 | 230 | 230 |
| Fixierschrumpf | 0,84 | 0,89 | 0,94 | 0,995 | 0,995 | 0,995 | 0,995 | 0,87 | 0,91 |

Tabelle 1, Fortsetzung, Erfindungsgemäße Beispiele

| Bedingungen/Merkmal | Beispiel 2 | Beispiel 3 | Beispiel 4 | Beispiel 5 | Beispiel 6 | Beispiel 7 | Beispiel 8 | Beispiel 9 | Beispiel 10 |
|---|---|---|---|---|---|---|---|---|---|
| **Garndaten** | | | | | | | | | |
| Titer [dtex] | 1129 | 1080 | 1080 | 1013 | 998 | 995 | 994 | 432 | 261 |
| Feinheitsbezogene Reiß-festigkeit [cN/tex9 | 68,4 | 72,1 | 75,5 | 76,8 | 78,9 | 81,4 | 82,8 | 69,1 | 66,0 |
| Höchstzugkraftdehnung [%] | 24,7 | 18,7 | 18,7 | 9,0 | 8,3 | 8,4 | 8,5 | 20,3 | 14,6 |
| Bezugsdehnung b. 54 cN/tex [%] | 21,2 | 15,4 | 9,5 | 5,8 | 5,9 | 6,0 | 5,7 | 15,4 | - |
| Trockenhitze-Schrumpf 200°C [%] | 5,3 | 9,5 | 13,4 | 16,9 | 18,0 | 20,0 | 20,0 | 6,3 | 5,9 |
| Spez.Visk. des Garns | 1,05 | 1,08 | 1,88 | 1,08 | 1,08 | 1,08 | 1,08 | 1,05 | 1,08 |
| Reißarbeitsindex [%·cN/tex] | 845 | 674 | 479 | 346 | 327 | 342 | 352 | 701 | 482 |

Tabelle 2, Vergleichsbeispiele

| Bedingungen/Merkmal | Beispiel 11 | Beispiel 12 | Beispiel 13 | Beispiel 14 | Beispiel 15 | Beispiel 16 |
|---|---|---|---|---|---|---|
| **Spinnen** | | | | | | |
| Gehalt d. Polyesters an Verb. Formel I [Gew.-%] | 0 | 0 | 0 | 0 | 0 | 0 |
| Spez.Visk. der Chips | 1,15 | 1,15 | 1,15 | 1,15 | SPINN-STRECK-VERFAHREN | |
| Spinntemperatur [°C] | 300 | 300 | 300 | 300 | | |
| Spinnabzugsgeschwindigkeit [m/min] | 740 | 740 | 740 | 740 | | |
| **Verstrecken** | | | | | | |
| Temperatur Stufe 1 [°C] | 85 | 84 | 85 | 84 | | |
| Verstreckverhältnis Stufe 1 | 3,32 | 3,42 | 3,30 | 3,42 | | |
| Temperatur Stufe 2 | 250 | 246 | 253 | 244 | | |
| Gesamt-Verstreckverhältnis | 5,76 | 5,72 | 5,79 | 5,76 | | |
| Geschwindigkeit d. 3.Streckwerks [m/min] | 300 | 300 | 300 | 300 | | |
| **Fixierung** | | | | | | |
| Fixiertemperatur | 230 | 242 | 216 | 238 | | |
| Fixierschrumpf | 0,912 | 0,898 | 0,954 | 0,877 | | |

Tabelle 2, Fortsetzung, Vergleichsbeispiele

| Bedingungen/Merkmal | Beispiel 11 | Beispiel 12 | Beispiel 13 | Beispiel 14 | Beispiel 15 | Beispiel 16 |
|---|---|---|---|---|---|---|
| **Garndaten** | | | | | | |
| Titer [dtex] | 1125 | 1125 | 1125 | 1125 | 1100 | 1100 |
| Feinheitsbezogene Reißfestigkeit [cN/tex9 | 74,5 | 73,5 | 76 | 72 | 73,9 | 74,5 |
| Höchstzugkraftdehnung [%] | 17,0 | 19,7 | 12,0 | 22 | 14,0 | 13,9 |
| Bezugsdehnung b. 54 cN/tex [%] | 12,3 | 14,6 | 7,8 | 17 | 8,0 | 8,4 |
| Trockenhitze-Schrumpf 200°C [%] | 4,9 | 3,5 | 8,5 | 2,5 | 16,8 | 22 |
| Spez.Visk. des Garns | 1,05 | 1,05 | 1,05 | 1,05 | 1,05 | 1,09 |
| Reißarbeitsindex [%·cN/tex] | 629 | 719 | 458 | 792 | 517 | 518 |

Zur Prüfung des erfindungsgemäßen schwer entflammbaren Multiflamentgarns auf sein Brandverhalten wurde aus einem erfindungsgemäßen Garn dtex 1100 f 200, Z 60 ein Gewebe der Struktur L 1/1, 8,5/8,8 Fd/cm hergestellt. Zum Vergleich wurde aus nicht modifiziertem handelsüblichem hochfestem Polyethylenterephthalat-Garn ((R)TREVIRA HOCHFEST) des gleichen Titers ein Gewebe der gleichen Struktur hergestellt.
Beide Gewebe wurden dann zunächst als Rohgewebe den Brennbarkeitsprüfungen nach DIN 4102, DIN 54336 und DIN 54333 sowie NF P 92-503 unterzogen.
Die Ergebnisse der Vergleichsversuche sind aus der Tabelle 3 ersichtlich.

Teile der zum Vergleich hergestellten Gewebe wurde mit einer Auflage von 600 g/m$^2$ Weich-PVC, enthaltend 13 Gew.-% $Sb_2O_3$ als Schwerentflammbarkeitszusatz, beschichtet und die gleichen Brennbarkeitsprüfungen an den beschichteten Geweben ausgeführt. Die Ergebnisse dieser Versuche finden sich in der Tabelle 4.

Tabelle 3

| Brennbarketsprüfungen d. rohen Gewebe | Erf.gem. Gewebe | TREVIRA HOCHFEST |
|---|---|---|
| **DIN 4102** | | |
| B2 - Prüfung | | |
| Erreichen d. 150 mm - Marke [sec.] | nein | < 20 |
| Gesamt-Brennzeit [sec.] | 2,3 | 30,0 |
| B1 - Prüfung | | |
| Restlänge [mm] | 71 | 70 |
| Max. Rauchgastemperatur [°C] | 112 | 109 |
| Max. Rauchgastemperatur erreicht nach [sec.] | 174 | 102 |
| min. Lichttransmission [%] | 25 | 30 |
| min. Lichttransmission erreicht nach [sec.] | 47 | 84 |
| **DIN 54336** | | |
| 3 Sekunden Beflammung | | |
| Gesamt-Brennzeit [sec.] | 3 | 26,5 |
| Nachbrennzeit [sec.] | 0 | 23,5 |
| Einbrennlänge [mm] | 52 | 166 |
| 15 Sekunden Beflammung | | |
| Gesamt-Brennzeit [sec.] | 6,4 | 11,3 |
| Nachbrennzeit [sec.] | 0 | 0 |
| Einbrennlänge [mm] | 130 | 129 |
| **DIN 54333** | | |
| Gesamt-Brennzeit [sec.] | 2,4 | 13,5 |
| Nachbrennzeit [sec.] | 0 | 3,0 |
| Einbrennlänge [mm] | 9 | 26 |
| **NF P 92-503** | M 1 | M 3 |

Tabelle 4

| Brennbarkeitsprüfungen d. beschichteten Gewebe | Erf.gem. Gewebe | TREVIRA HOCHFEST |
|---|---|---|
| **DIN 4102** | | |
| B2 - Prüfung | | |
| Erreichen d. 150 mm - Marke [sec.] | > 20 | < 20 |
| Gesamt-Brennzeit [sec.] | 26,8 | 121,0 |
| B1 - Prüfung | | |
| Restlänge [mm] | 51 | 7 |
| Max. Rauchgastemperatur [°C] | 118 | 165 |
| Max. Rauchgastemperatur erreicht nach [sec.] | 36 | 41 |
| min. Lichttransmission [%] | 42 | 0 |
| min. Lichttransmission erreicht nach [sec.] | 37 | 50 |

Tabelle 4 (fortgesetzt)

| Brennbarkeitsprüfungen d. beschichteten Gewebe | Erf.gem. Gewebe | TREVIRA HOCHFEST |
|---|---|---|
| **DIN 54336** | | |
| 3 Sekunden Beflammung | | |
| Gesamt-Brennzeit [sec.] | 3 | 3,2 |
| Nachbrennzeit [sec.] | 0 | 0,2 |
| Einbrennlänge [mm] | 8 | 6 |
| 15 Sekunden Beflammung | | |
| Gesamt-Brennzeit [sec.] | 71,3 | 161,3 |
| Nachbrennzeit [sec.] | 56,3 | 141,3 |
| Einbrennlänge [mm] | 230 | 339 |
| **DIN 54333** | | |
| Gesamt-Brennzeit [sec.] | 15,6 | 17,8 |
| Nachbrennzeit [sec.] | 1,3 | 4,4 |
| Einbrennlänge [mm] | 12 | 13,5 |
| **NF P 92-503** | M 1 | M 3 |

**Patentansprüche**

1. Schwer entflammbares Multifilamentgarn, insbesondere für technische Zwecke aus einem Polyester aus Dicarbonsäure- und Diol-Komponenten, der in der Polymerkette Baugruppen der Formel I

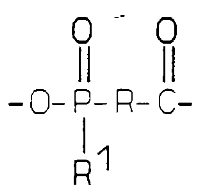

(I)

aufweist, worin

R ein gesättigter offenkettiger oder cyclischer Alkylen-, Arylen- oder Aralkylenrest und
$R^1$ ein Alkylrest mit bis zu 6 C-Atomen oder ein Aryl- oder Aralkylrest ist, dadurch gekennzeichnet, daß es eine feinheitsbezogene Höchstzugkraft (F) von mindestens 65 cN/tex aufweist und in Form eines Rohgewebes bei der Brennbarkeitsprüfung nach DIN 4102/B2 eine Gesamt-Brennzeit hat, die mindestens um den Faktor 5, vorzugsweise um den Faktor 10 kürzer ist als die eines vergleichbaren Rohgewebes aus nicht-phosphormodifiziertem Polyester und daß nach DIN 54336 bei 3 und 15 sec. Beflammung und nach DIN 54333 bei 3 sec. Beflammung kein Nachbrennen auftritt.

2. Multifilamentgarn gemäß Anspruch 1, dadurch gekennzeichnet, daß der Polyester Baugruppen der Formel I enthält, worin

R offenkettiges Alkan-diyl mit mit 1 bis 15, vorzugsweise 2 bis 10, C-Atomen, cyclisches Alkan-diyl mit 4 bis 8, vorzugsweise 6, C-Atomen, Arylen mit 6 bis 12, vorzugsweise 6 bis 10, C-Atomen oder Aralkyl mit 7 bis 13, vorzugsweise 7 bis 11, C-Atomen, jeweils mit ein oder zwei kondensierten oder nicht kondensierten Kernen, und
$R^1$ Alkyl mit 1 bis 6, vorzugsweise 1 bis 4, C-Atomen, Arylen mit 6 bis 12, vorzugsweise 6 bis 10, C-Atomen oder Aralkyl mit 7 bis 13, vorzugsweise 7 bis 11, C-Atomen, jeweils mit ein oder zwei kondensierten oder nicht kondensierten Kernen bedeutet.

**3.** Multifilamentgarn gemäß mindestens einem der Ansprüche 1 und 2, dadurch gekennzeichnet, daß das Garn eine feinheitsbezogene Höchstzugkraft von über 65 cN/tex und einen Trockenhitzeschrumpf $S_{200}$ von unter 7,5 % aufweist.

**4.** Multifilamentgarn gemäß mindestens einem der Ansprüche 1 bis 3, dadurch gekennzeichnet, daß das Garn eine feinheitsbezogene Höchstzugkraft von über 70 cN/tex und einen Trockenhitzeschrumpf $S_{200}$ von unter 15 % aufweist.

**5.** Multifilamentgarn gemäß mindestens einem der Ansprüche 1 bis 4, dadurch gekennzeichnet, daß das Garn eine feinheitsbezogene Höchstzugkraft von über 75 cN/tex und einen Trockenhitzeschrumpf $S_{200}$ von über 15 % aufweist.

**6.** Multifilamentgarn gemäß mindestens einem der Ansprüche 1 bis 5, dadurch gekennzeichnet, daß zwischen der feinheitsbezogenen Höchstzugkraft F des Garns und seinem Trockenhitzeschrumpf $S_{200}$ (in %) der aus Gleichung (1) ersichtliche Zusammenhang besteht:

$$F = K + 0{,}954 * S_{200} \quad (1)$$

wobei der Summand K einen Wert von über 55, vorzugsweise von 60 bis 67, hat, und $S_{200}$ ein Wert von 2 bis 25, vorzugsweise von 4 bis 22 ist.

**7.** Multifilamentgarn gemäß mindestens einem der Ansprüche 1 bis 6, dadurch gekennzeichnet, daß es eine Höchstzugkraftdehnung (E) von 5 bis 30 % vorzugsweise von 7,5 bis 26 %,

eine Bezugsdehnung bei einer Belastung von 54 cN/tex von 4 bis 25 %, vorzugsweise 5 bis 23 % und einen Reißarbeitsindex $A_R = F \cdot E/2$von 300 bis 900 [%·cN/tex] aufweist.

**8.** Multifilamentgarn gemäß mindestens einem der Ansprüche 1 bis 7, dadurch gekennzeichnet, daß der Polyester aufgebaut ist zu mindestens 80 Mol.-% aus Bausteinen, die sich von ein- oder zweikernigen aromatischen Dicarbonsäuren und von Alkandiolen mit 2 bis 4 C-Atomen oder 1,4-Di-hydroxymethyl-cyclohexan ableiten und
zu maximal 20 Mol.-% aus Baugruppen der Formel I und aus Bausteinen, die sich von aromatischen oder araliphatischen Dicarbonsäuren mit einem oder mehreren, vorzugsweise einem oder zwei kondensierten oder nicht kondensierten aromatischen Kernen, oder von cyclischen oder acyclischen aliphatischen Dicarbonsäuren ableiten und aus Baugruppen, die sich von verzweigten und/oder längerkettigen Diolen mit 3 bis 10 C-Atomen, oder von cyclischen Diolen, oder von Ethergruppen enthaltenden Diolen, oder von Polyglycol mit einem Molgewicht von ca. 500 - 2000 ableiten.

**9.** Multifilamentgarn gemäß mindestens einem der Ansprüche 1 bis 8, dadurch gekennzeichnet, daß es aus Polyestern besteht, deren Polymerketten, bezogen auf die Summe aller ihrer Dicarbonsäure- und Diol-Baugruppen, aus

0,5 bis 14, vorzugsweise 1,0 bis 10 Mol.-%, Baugruppen der oben angegebenen Formel I,

40 bis 49,75 Mol.-%, vorzugsweise 43,5 bis 49,5 Mol.-%, Baugruppen der Formel II

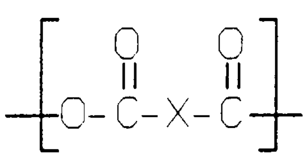

(II)

und 40 bis 49,75 Mol.-%, vorzugsweise 43,5 bis 49,5 Mol.-% Baugruppen der Formel IV

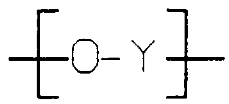

(IV)

aufgebaut sind, worin

X zu mindestens 80 Mol.-% (bezogen auf die Gesamtheit der Reste X = 100 Mol.-%) ein- oder zweikernige aromatische Reste mit 6 bis 12 C-Atomen, vorzugsweise Phenylenreste, insbesondere 1,4-Phenylenreste und zu maximal 20 Mol.-% ein- oder mehrkernige aromatische Reste mit 5 bis 16, vorzugsweise 6 bis 18 C-Atomen, araliphatische Reste mit einem oder zwei aromatischen Kernen und 1 bis 6 C-Atomen in den aliphatischen Strukturelementen, oder aliphatische Reste mit 4 bis 10 Kohlenstoffatomen, vorzugsweise 6 bis 8 Kohlenstoffatomen, bedeutet

Y zu mindestens 80 Mol.-% (bezogen auf die Gesamtheit der Reste Y = 100 Mol.-%) Alkylen- oder Polymethylengruppen mit 2 bis 4 Kohlenstoffatomen oder Cycloalkan- oder Bis-methylen-cycloalkangruppen mit 6 bis 10 C-Atomen und zu maximal 20 Mol.-% geradkettiges oder verzweigtes Alkandiyl mit 5 bis 16, vorzugsweise 5 bis 8, C-Atomen, Cycloalkan- oder Bis-methylen-cycloalkangruppen mit 6 bis 10 C-Atomen oder
Reste der Formel $-(CH_2CHR^3-O)_n-CH_2CHR^3-$, worin $R^3$ für Methyl oder Wasserstoff steht und n eine ganze Zahl von 1 bis 40 bedeutet, wobei n = 1 oder 2 für Anteile bis zu 15 Mol.-% bevorzugt sind und Gruppen mit n = 10 bis 40 vorzugsweise nur in Anteilen von unter 5 Mol.-% vorhanden sind.

**10.** Multifilamentgarn gemäß mindestens einem der Ansprüche 1 bis 9, dadurch gekennzeichnet, daß es aus Polyestern besteht, die keine Baugruppen der Formel (III) aufweisen, in denen 90 bis 100 Mol.-%, vorzugsweise 95 bis 100 Mol.-%, der Reste X p-Phenylen und 0 bis 10 Mol.-%, vorzugsweise 0 bis 5 Mol.-%, der Reste X m-Phenylen, 5-Sulpho-phenylen-1,3; 5-Sulfopropoxy-phenylen-1,3; Naphtylen-2,6; Biphenylen-4,4'; 1,4-Bis-methylen-phenyl, Cyclohexan-1,4-diyl, Cylobutan-1,2-diyl, n-Butan-1,4-diyl, n-Pentan-1,5-diyl oder Reste der Formel V

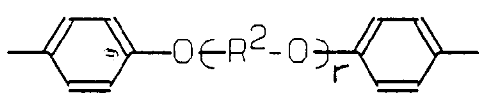

(V)

worin $R^2$ geradkettiges oder verzweigtes Alkan-diyl mit 2 bis 6 C-Atomen bedeutet und r für 0 oder 1 steht, sind.

**11.** Multifilamentgarn gemäß mindestens einem der Ansprüche 1 bis 10, dadurch gekennzeichnet, daß es aus Polyestern besteht, bei denen 80 bis 100 Mol.-% der Dioleinheiten Ethylenglycoleinheiten und

0 bis 20 Mol% 1,4-Bis-methylen-cyclohexan- und/oder 2,2-Dimethyl-propan-1,3-diyl-einheiten, und
0 bis 3 Mol.-% längerkettige Dioleinheiten sind.

**12.** Multifilamentgarn gemäß mindestens einem der Ansprüche 1 bis 11, dadurch gekennzeichnet, daß in der Formel I

$R^1$ Alkan-diyl mit 2 bis 6 C-Atomen oder Phenylen, insbesondere Ethylen, und
$R^2$ Alkyl mit 1 bis 6 C-Atomen, oder Aryl oder Aralkyl mit 6 bis 7 C-Atomen, insbesondere Methyl, Ethyl, Phenyl oder Benzyl bedeuten.

**13.** Multifilamentgarn gemäß mindestens einem der Ansprüche 1 bis 12, dadurch gekennzeichnet, daß mindestens 90 Mol.-% der Baugruppen des Polyesters Ethylen-terephthalat-Gruppen sind.

**14.** Verfahren zur Herstellung von schwer entflammbarem Multifilamentgarn für technische Zwecke aus einem Polyester aus Dicarbonsäure- und Diol-Komponenten, der in der Polymerkette Baugruppen der im Anspruch 1 angegebenen Formel I aufweist, wobei der Polyester in an sich bekannter Weise durch Aufschmelzen, Schmelzefiltration und Extrusion aus der Schmelze gesponnen, die ersponnenen Filamente durch Anblasen mit Kühlluft abgekühlt, abgezogen, verstreckt und fixiert werden, dadurch gekennzeichnet, daß die Filamente mit einer Spinnabzugsgeschwindigkeit von über 300 m/min. abgezogen, und aufgespult oder abgelegt werden,
daß die ersponnenen Filamente kontinuerlich oder diskontinuierlich mindestens zweistufig verstreckt werden, wobei die Vorverstreckung, die 50 bis 70 % der Gesamtverstreckung beträgt, bei einer Temperatur zwischen 70 und 85°C durchgeführt wird und in der zweiten Verstreckstufe, die bei einer Temperatur von 215 bis 235°C, durchgeführt wird, ein Gesamt-Verstreckverhältnis von 1:4,5 bis 1:6 eingestellt wird, und
daß die verstreckten Filamente gegebenenfalls noch einer Fixier- und Relaxationsbehandlung bei Temperaturen von 225 bis 240°C mit einem Schrumpfverhältnis von 1:1 bis 1:0,8 unterworfen werden.

**15.** Verfahren gemäß Anspruch 14, dadurch gekennzeichnet, daß das Verstreckverhältnis in der ersten Verstreckstufe im Bereich von 1:2,4 bis 1:3,9 liegt.

**16.** Verwendung der schwer entflammbaren Multifilamentgarne des Anspruchs 1 zur Herstellung von hochfesten, schwer entflammbaren Bautextilien.

**17.** Verwendung der schwer entflammbaren Multifilamentgarne des Anspruchs 1 zur Herstellung von Zelten.

**18.** Verwendung der schwer entflammbaren Multifilamentgarne des Anspruchs 1 zur Herstellung von Transportbändern.

**19.** Verwendung der schwer entflammbaren Multifilamentgarne des Anspruchs 1 zur Herstellung von flammhemmenden Beschichtungsträgern.

**20.** Verwendung der schwer entflammbaren Multifilamentgarne des Anspruchs 1 zur Herstellung von flammhemmend beschichteten Geweben.

**21.** Verwendung der schwer entflammbaren Multifilamentgarne des Anspruchs 1 als Festigkeitsträger in Gummierzeugnissen.

## Claims

**1.** A low flammability multifilament yarn, especially for use in industry, composed of a polyester formed from dicarboxylic acid and diol components which contains, in the polymer chain, units of the formula I

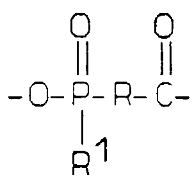

(I)

where

R is a saturated open-chain or cyclic alkylene, arylene or aralkylene radical, and
$R^1$ is an alkyl radical of up to 6 carbon atoms or an aryl or aralkyl radical,

characterized by a tenacity (F) of at least 65 cN/tex, a total burn time, when made into a loomstate cloth and subjected to the flammability test of DIN 4102/B2, which is at least 5, preferably 10, times shorter than that of a comparable loomstate cloth composed of non. phosphorus-modified polyester, and by the absence of afterburning on 3 and 15 sec flaming according to DIN 54336 and 3 sec flaming according to DIN 54333.

**2.** The multifilament yarn of claim 1, wherein the polyester contains units of the formula I where

R is open-chain alkanediyl having from 1 to 15, preferably from 2 to 10, carbon atoms, cyclic alkanediyl having from 4 to 8, preferably 6, carbon atoms, arylene having from 6 to 12, preferably from 6 to 10, carbon atoms or aralkyl having from 7 to 13, preferably from 7 to 11, carbon atoms, in each case with one or two fused or

unfused nuclei, and

$R^1$ is alkyl having from 1 to 6, preferably from 1 to 4, carbon atoms, arylene having from 6 to 12, preferably from 6 to 10, carbon atoms or aralkyl having from 7 to 13, preferably from 7 to 11, carbon atoms, in each case with one or two fused or unfused nuclei.

**3.** The multifilament yarn of at least one of claims 1 and 2, characterized by a tenacity of above 65 cN/tex and a dry heat shrinkage $S_{200}$ of below 7.5%.

**4.** The multifilament yarn of at least one of claims 1 to 3, characterized by a tenacity of above 70 cN/tex and a dry heat shrinkage $S_{200}$ of below 15%.

**5.** The multifilament yarn of at least one of claims 1 to 4, characterized by a tenacity of above 75 cN/tex and a dry heat shrinkage $S_{200}$ of above 15%.

**6.** The multifilament yarn of at least one of claims 1 to 5, characterized by the relationship between the tenacity F of the yarn and its dry heat shrinkage $S_{200}$ (in %) given by equation (1):

$$F = K + 0.954{*}S_{200} \qquad (1)$$

where the summand K is above 55, preferably from 60 to 67, and $S_{200}$ is from 2 to 25, preferably from 4 to 22.

**7.** The multifilament yarn of at least one of claims 1 to 6, characterized by a breaking extension (E) of from 5 to 30%, preferably from 7.5 to 26%,

an extension at 54 cN/tex loading of from 4 to 25%, preferably from 5 to 23%, and
a breaking energy index $A_R = F \cdot E/2$ of from 300 to 900 [%·cN/tex].

**8.** The multifilament yarn of at least one of claims 1 to 7, wherein the polyester is composed to at least 80 mol% of units derived from monocyclic or bicyclic aromatic dicarboxylic acids and from alkanediols having from 2 to 4 carbon atoms or 1,4-dihydroxymethylcyclohexane, and
to not more than 20 mol% of units of the formula I and of units derived from aromatic or araliphatic dicarboxylic acids having one or more, preferably one or two, fused or unfused aromatic nuclei, or from cyclic or acyclic aliphatic dicarboxylic acids and of units derived from branched and/or longer-chain diols having from 3 to 10 carbon atoms, or from cyclic diols, or from diols containing ether groups, or from polyglycol having a molecular weight of about 500-2000.

**9.** The multifilament yarn of at least one of claims 1 to 8, wherein the polymer chains of the polyester, based on the sum of all their dicarboxylic acid and diol units, contain from 0.5 to 14, preferably from 1.0 to 10, mol% of units of the above-indicated formula I,

from 40 to 49.75 mol%, preferably from 43.5 to 49.5 mol%, of units of the formula II

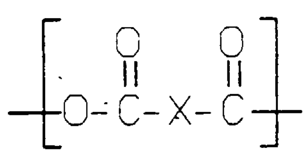

(II)

and from 40 to 49.75 mol%, preferably from 43.5 to 49.5 mol%, of units of the formula IV

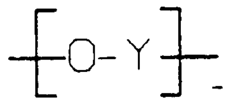

(IV)

where

X comprises at least 80 mol% (based on the totality of the radicals X = 100 mol%) of monocyclic or bicyclic aromatic radicals having from 6 to 12 carbon atoms, preferably phenylene radicals, in particular 1,4-phenylene radicals, and
not more than 20 mol% of monocyclic or polycyclic aromatic radicals having from 5 to 16, preferably from 6 to 18, carbon atoms, araliphatic radicals having one or two aromatic nuclei and from 1 to 6 carbon atoms in the aliphatic structural elements, or aliphatic radicals having from 4 to 10 carbon atoms, preferably from 6 to 8 carbon atoms,

Y comprises at least 80 mol% (based on the totality of the radicals Y = 100 mol%) of alkylene or polymethylene groups having from 2 to 4 carbon atoms or cycloalkane or bismethylenecycloalkane groups having from 6 to 10 carbon atoms and not more than 20 mol% of straight-chain or branched alkanediyl having from 5 to 16, preferably from 5 to 8, carbon atoms, cycloalkane or bismethylenecycloalkane groups having from 6 to 10 carbon atoms or
radicals of the formula $-(CH_2CHR^3-O)_n-CH_2CHR^3-$, where $R^3$ is methyl or hydrogen and n is an integer from 1 to 40, n = 1 or 2 being preferred for proportions up to 15 mol% and groups having n = 10 to 40 preferably being present only in proportions of below 5 mol%.

**10.** The multifilament yarn of at least one of claims 1 to 9, wherein the polyester contains no units of the formula (III) in which from 90 to 100 mol%, preferably from 95 to 100 mol%, of the radicals X are p-phenylene and from 0 to 10 mol%, preferably from 0 to 5 mol%, of the radicals X are m-phenylene, 5-sulfo-1,3-phenylene; 5-sulfopropoxy-1,3-phenylene; 2,6-naphthylene; 4,4'-biphenylene; 1',4-bismethylenephenyl, 1,4-cyclohexanediyl, 1,2-cyclobutanediyl, 1,4-n-butanediyl, 1,5-n-pentanediyl or radicals of the formula V

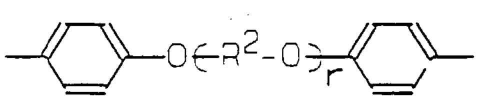

(V)

where $R^2$ is straight-chain or branched alkanediyl having from 2 to 6 carbon atoms and r is 0 or 1.

**11.** The multifilament yarn of at least one of claims 1 to 10, wherein, in the polyester, from 80 to 100 mol% of the diol units are ethylene glycol units and
from 0 to 20 mol% are 1,4-bismethylenecyclohexane and/or 2,2-dimethyl-1,3-propanediyl units, and from 0 to 3 mol% are longer-chain diol units.

**12.** The multifilament yarn of at least one of claims 1 to 11, wherein, in the formula I,

$R^1$ is alkanediyl having from 2 to 6 carbon atoms or phenylene, in particular ethylene, and
$R^2$ is alkyl having from 1 to 6 carbon atoms, or aryl or aralkyl having from 6 to 7 carbon atoms, in particular methyl, ethyl, phenyl or benzyl.

**13.** The multifilament yarn of at least one of claims 1 to 12, wherein at least 90 mol% of the units making up the polyester are ethylene terephthalate groups.

**14.** A process for producing low flammability multifilament yarn for use in industry from a polyester formed from dicarboxylic acid and diol components which, in the polymer chain, contains units of the formula I indicated in claim 1 by the conventional steps of melting the polyester, filtering the melt, extruding the melt through a spinneret, cooling the spun filaments by quenching with air, followed by take-off, drawing and setting, which comprises taking off the filaments at a spinning take-off speed of above 300 m/min and winding them up or canning them,
drawing the spun filaments continuously or batchwise in at least two stages, the pre-draw, which accounts for from

50 to 70% of the total draw, being carried out at a temperature between 70 and 85°C and the second drawing stage, which is carried out at a temperature of from 215 to 235°C, being used to set a total-draw ratio of from 1: 4.5 to 1:6, and
subjecting the drawn filaments optionally, further, to a setting and relaxing treatment at temperatures of from 225 to 240°C using a shrinkage ratio of from 1:1 to 1:0.8.

**15.** The process of claim 14, wherein the draw ratio of the first drawing stage ranges from 1:2.4 to 1:3.9.

**16.** The use of the low flammability multifilament yarns of claim 1 for producing high tenacity, low flammability building textiles.

**17.** The use of the low flammability multifilament yarns of claim 1 for producing tents.

**18.** The use of the low flammability multifilament yarns of claim 1 for producing conveyor belts.

**19.** The use of the low flammability multifilament yarns of claim 1 for producing flame resistant coating substrates.

**20.** The use of the low flammability multifilament yarns of claim 1 for producing fabrics with a flame resistant coating.

**21.** The use of the low flammability multifilament yarns of claim 1 as strength components in rubber products.

**Revendications**

**1.** Fil multifilament difficilement inflammable, en particulier à des fins industrielles, en un polyester à base de composants acide dicarboxylique et diol, qui comporte dans la chaîne polymère des groupes constitutifs de formule I

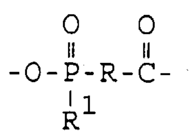

(I)

dans laquelle

R est un radical alkylène saturé à chaîne ouverte ou cyclique, arylène ou aralkylène, et
$R^1$ est un radical alkyle ayant jusqu'à 6 atomes de carbone ou un radical aryle ou aralkyle,

caractérisé en ce qu'il présente une force de traction maximale (F) par rapport à la finesse d'au moins 65 cN/tex et, sous forme d'un tissu brut, dans l'essai d'inflammabilité selon DIN 4102/B2, a un temps de combustion totale qui est au moins 5 fois plus court, de préférence 10 fois plus court, que celui d'un tissu brut comparable en polyester non modifié par du phosphore, et en ce qu'aucune post-combustion n'apparaît, selon DIN 54336, avec une inflammation de 3 et 15 secondes, et selon DIN 54333, avec une inflammation de 3 secondes.

**2.** Fil multifilament selon la revendication 1, caractérisé en ce que le polyester contient des groupes constitutifs de formule I dans lesquels

R représente un radical alcanediyle à chaîne droite ayant de 1 à 15, de préférence de 2 à 10 atomes de carbone, alcanediyle cyclique ayant de 4 à 8, de préférence 6 atomes de carbone, arylène ayant de 6 à 12, de préférence de 6 à 10 atomes de carbone, ou aralkyle ayant de 7 à 13, de préférence de 7 à 11 atomes de carbone, comportant chacun un ou deux noyaux condensés ou non condensés, et
$R^1$ représente un radical alkyle ayant de 1 à 6, de préférence de 1 à 4 atomes de carbone, arylène ayant de 6 à 12, de préférence de 6 à 10 atomes de carbone, ou aralkyle ayant de 7 à 13, de préférence de 7 à 11 atomes de carbone, comportant chacun un ou deux noyaux condensés ou non condensés.

**3.** Fil multifilament selon au moins l'une des revendications 1 et 2, caractérisé en ce que le fil présente une force de traction maximale, par rapport à la finesse, de plus de 65 cN/tex et une contraction à la chaleur sèche $S_{200}$ de

moins de 7,5 %.

**4.** Fil multifilament selon au moins l'une des revendications 1 à 3, caractérisé en ce que le fil présente une force de traction maximale, par rapport à la finesse, de plus de 70 cN/tex et une contraction à la chaleur sèche $S_{200}$ de moins de 15 %.

**5.** Fil multifilament selon au moins l'une des revendications 1 à 4, caractérisé en ce que le fil présente une force de traction maximale, par rapport à la finesse, de plus de 75 cN/tex et une contraction à la chaleur sèche $S_{200}$ de plus de 15 %.

**6.** Fil multifilament selon au moins l'une des revendications 1 à 5, caractérisé en ce que, entre la force de traction maximale F par rapport à la finesse du fil et sa contraction à la chaleur sèche $S_{200}$ (en %), il existe la relation qui se dégage de l'équation (1)

$$F = K + 0{,}954.S_{200} \qquad (1)$$

dans laquelle le terme K a une valeur de plus de 55, de préférence de 60 à 67 et $S_{200}$ a une valeur de 2 à 25, de préférence de 4 à 22.

**7.** Fil multifilament selon au moins l'une des revendications 1 à 6, caractérisé en ce qu'il présente un allongement à la force de traction maximale (E) de 5 à 30 %, de préférence de 7,5 à 26 %,
un allongement de référence, sous une contrainte de 54 cN/tex de 4 à 25 %, de préférence de 5 à 23 %, et un indice de travail à la rupture $A_R$ = F.E/2 allant de 300 à 900 (%.cN/tex).

**8.** Fil multifilament selon au moins l'une des revendications 1 à 7, caractérisé en ce que le polyester est constitué à raison d'au moins 80 % en moles de composants qui dérivent d'acides dicarboxyliques aromatiques mono- ou binucléaires et d'alcanediols ayant de 2 à 4 atomes de carbone ou de 1,4-dihydroxyméthylcyclohexane, et, à raison d'au maximum 20 % en moles, de groupes constitutifs de formule I et de composants qui dérivent d'acides dicarboxyliques aromatiques ou araliphatiques comportant un ou plusieurs, de préférence un ou deux noyaux aromatiques condensés ou non condensés, ou d'acides dicarboxyliques aliphatiques cycliques ou acycliques et de groupes constitutifs qui dérivent de diols ramifiés et/ou à longue chaîne ayant de 3 à 10 atomes de carbone, ou de diols cycliques ou de diols contenant des groupes éther, ou d'un polyglycol ayant une masse moléculaire d'environ 500 à 2 000.

**9.** Fil multifilament selon au moins l'une des revendications 1 à 8, caractérisé en ce qu'il est constitué de polyesters dont les chaînes polymères, par rapport à la somme de tous leurs groupes constitutifs acide dicarboxylique et diol, sont constitués de

- 0,5 à 14, de préférence 1,0 à 10 % en moles, de groupes constitutifs de formule I indiqués plus haut,
- 40 à 49,75 % en moles, de préférence 43,5 à 49,5 % en moles, de groupes constitutifs de formule II

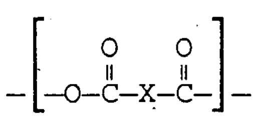

(II)

- et 40 à 49,75 % en moles, de préférence 43,5 à 49,5 % en moles de groupes constitutifs de formule IV

$$—[—O—Y—]— \qquad (IV)$$

formules dans lesquelles

X représente, à raison d'au moins 80 % en moles, (par rapport à la totalité des radicaux X = 100 % en moles) des radicaux aromatiques mono- ou binucléaires ayant de 6 à 12 atomes de carbone, de préférence des

radicaux phénylène; en particulier des radicaux 1,4-phénylène, et à raison d'au maximum 20 % en moles, des radicaux aromatiques mono- ou polynucléaires ayant de 5 à 16, de préférence de 6 à 18 atomes de carbone, des radicaux aliphatiques comportant un ou deux noyaux aromatiques et de 1 à 6 atomes de carbone dans les éléments structuraux aliphatiques, ou des radicaux aliphatiques ayant de 4 à 10 atomes de carbone, de préférence de 6 à 8 atomes de carbone,

Y représente, à raison d'au moins 80 % en moles (par rapport la totalité des radicaux Y = 100 % en moles) des groupes alkylène ou polyméthylène ayant de 2 à 4 atomes de carbone, ou des groupes cycloalcane ou bisméthylènecycloalcane ayant de 6 à 10 atomes de carbone, et à raison d'au maximum 20 % en moles, un groupe alcanediyle à chaîne droite ou ramifié ayant de 5 à 16, de préférence de 5 à 8 atomes de carbone, des groupes cycloalcane ou bisméthylènecycloalcane ayant de 6 à 10 atomes de carbone, ou des radicaux de formule $-(CH_2CHR^3-O)_n-CH_2CHR^3-$, dans laquelle $R^3$ représente le groupe méthyle ou un atome d'hydrogène et n représente un nombre entier allant de 1 à 40, n = 1 ou 2 étant préféré pour des proportions allant jusqu'à 15 % en moles, et des groupes dans lesquels n = 10 à 40 n'étant de préférence présents qu'en proportions de moins de 5 % en moles.

**10.** Fil multifilament selon au moins l'une des revendications 1 à 9, caractérisé en ce qu'il est constitué de polyesters qui ne comportent pas de groupes structuraux de formule III, dans lesquels 90 à 100 % en moles, de préférence 95 à 100 % en moles, des radicaux X représentent le groupe p-phénylène et 0 à 10 % en moles, de préférence 0 à 5 % en moles des radicaux X représentent le groupe m-phénylène, 5-sulfophénylène-1,3, 5-sulfopropoxyphénylène-1,3, naphtylène-2,6, biphénylène-4,4', 1,4-bis-méthylènephényle, cyclohexane-1,4-diyle, cyclobutane-1,2-diyle, n-butane-1,4-diyle, n-pentane-1,5-diyle, ou des radicaux de formule V

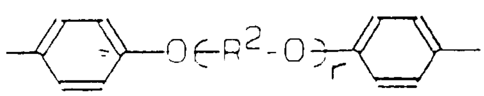

(V)

dans laquelle $R^2$ représente un groupe alcanediyle à chaîne droite ou ramifié ayant de 2 à 6 atomes de carbone, et r représente 0 ou 1.

**11.** Fil multifilament selon au moins l'une des revendications 1 à 10, caractérisé en ce qu'il constitué de polyesters dans lesquels 80 à 100 % en moles des motifs diol sont des motifs éthylèneglycol, et

0 à 20 % en moles sont des motifs 1,4-bis-méthylènecyclohexane et/ou 2,2-diméthylpropane-1,3-diyle, et 0 à 3 % en moles sont des motifs diol à chaîne droite.

**12.** Fil multifilament selon au moins l'une des revendications 1 à 11, caractérisé en ce que, dans la formule I

$R^1$ représente un groupe alcanediyle ayant de 2 à 6 atomes de carbone ou phénylène, en particulier éthylène, et
$R^2$ représente un groupe alkyle ayant de 1 à 6 atomes de carbone, ou aryle ou aralkyle ayant 6 ou 7 atomes de carbone, en particulier le groupe méthyle, éthyle, phényle ou benzyle.

**13.** Fil multifilament selon au moins l'une des revendications 1 à 12, caractérisé en ce qu'au moins 90 % en moles des groupes constitutifs du polyester sont des groupes téréphtalate d'éthylène.

**14.** Procédé pour la fabrication d'un fil multifilament difficilement inflammable à des fins industrielles, constitué d'un polyester à base de composants acide dicarboxylique et diol, qui comporte dans la chaîne polymère des groupes constitutifs de formule I indiquée dans la revendication 1, dans lequel le polyester est filé, d'une façon connue en soi, par fusion, filtration de la masse fondue et extrusion à partir de la masse fondue, les fils sont refroidis par insufflation d'air froid, tirés, étirés et fixés, caractérisé en ce les filaments sont tirés à une vitesse de tirage de plus de 300 m/min et enroulés ou déposés,

en ce que les fils sont étirés en continu ou en mode discontinu en au moins deux étapes, l'étirage préliminaire, qui représente de 50 à 70 % de l'étirage total, étant effectué à une température comprise entre 70 et 85°C, et dans la seconde étape d'étirage, qui est effectué à une température de 215 à 235°C, on ajuste un rapport d'étirage total de 1:4,5 à 1:6, et
en ce que les filaments étirés sont éventuellement soumis encore à un traitement de fixage et de relaxation

à des températures de 225 à 240°C, à un rapport de contraction de 1:1 à 1:0,8.

**15.** Procédé selon la revendication 14, caractérisé en ce que le rapport d'étirage dans la première étape d'étirage se situe dans la plage allant de 1:2,4 à 1:3,9.

**16.** Utilisation des fils multifilaments difficilement inflammables de la revendication 1 pour la fabrication de textiles de construction à haute ténacité, difficilement inflammables.

**17.** Utilisation des fils multifilaments difficilement inflammables de la revendication 1 pour la fabrication de tentes.

**18.** Utilisation des fils multifilaments difficilement inflammables de la revendication 1 pour la fabrication de bandes transporteuses.

**19.** Utilisation des fils multifilaments difficilement inflammables de la revendication 1 pour la fabrication de supports de revêtements ignifuges.

**20.** Utilisation des fils multifilaments difficilement inflammables de la revendication 1 pour la fabrication de tissus à revêtement ignifuge.

**21.** Utilisation des fils multifilaments difficilement inflammables de la revendication 1 en tant que raidisseurs dans des produits de caoutchouc.

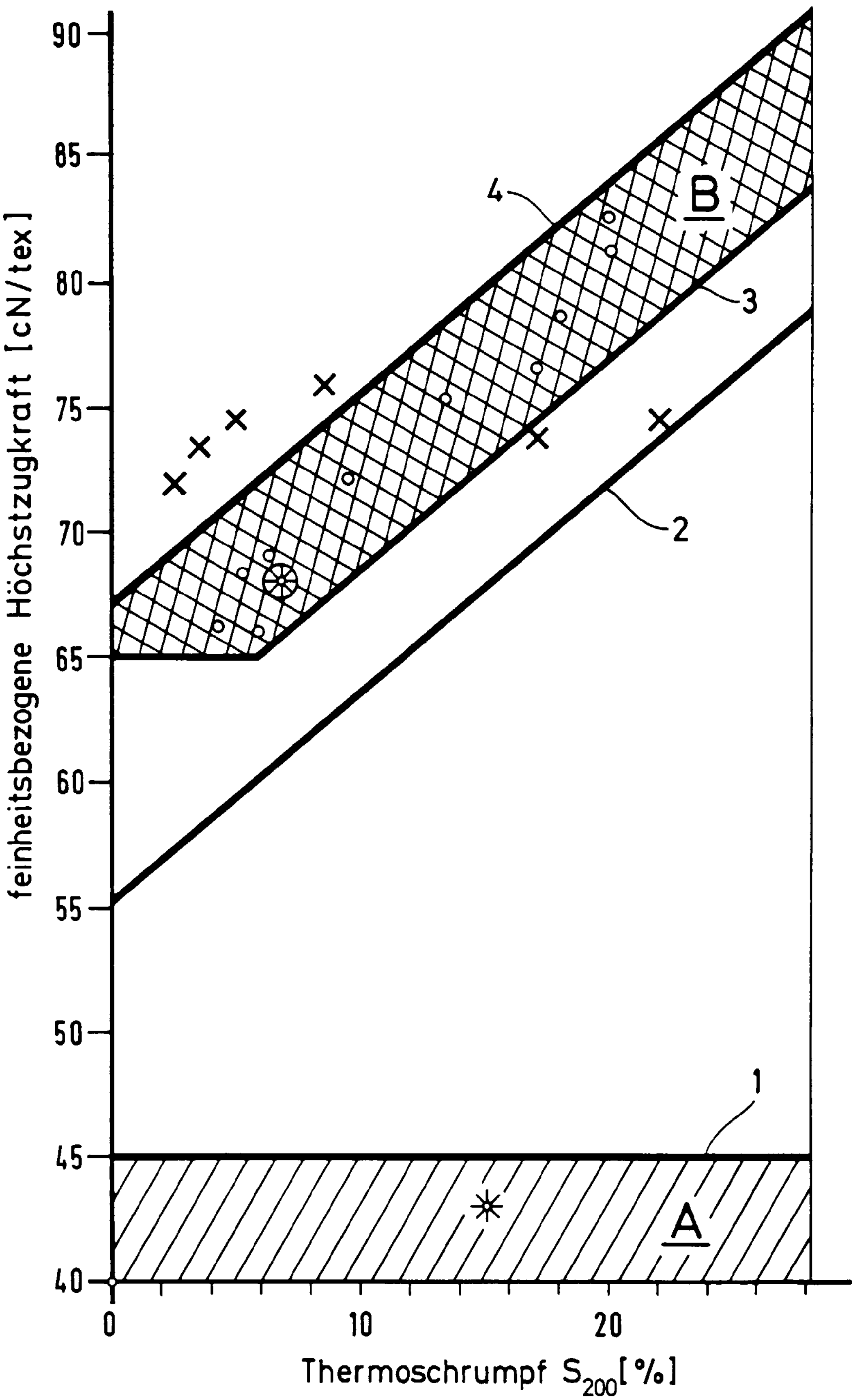
feinheitsbezogene Höchstzugkraft [cN/tex]
90
85
80
75
70
65
60
55
50
45
40
0
10
20
Thermoschrumpf $S_{200}$ [%]
B
A
1
2
3
4